# FASCICULE DE BREVET EUROPEEN

(11) **EP 2 578 545 B1**
(45) Date de publication et mention de la délivrance du brevet: **01.03.2017**
(21) Numéro de dépôt: 12187432.5
(22) Date de dépôt: 05.10.2012
(51) Int. Cl.: C02F 3/04

(54) **Dispositif de dispersion pour un effluent liquide**
Vorrichtung zur Dispersion flüssigen Abfalls
Device for dispersing a liquid effluent

(30) Priorité: 06.10.2011 FR 1159024
(43) Date de publication de la demande: 10.04.2013
(73) Titulaire: Hamon Thermal Europe (France), 93284 Saint-Denis (FR)
(72) Inventeur: Martin, Claude Gaston Victor, 41160 LA VILLE AUX CLERCS (FR)
(74) Mandataire: Lavoix

(56) Documents cités:
- EP-A1- 0 046 276
- FR-A- 445 801
- FR-A- 896 518
- GB-A- 853 892
- GB-A- 191 018 823
- US-A- 2 263 125
- US-A1- 2003 196 953

## Description

L'invention concerne en général les dispositifs de dispersion pour un effluent liquide, notamment pour les installations de traitement d'eaux usées.

Certaines installations sont équipées de lits bactériens, destinés au traitement des effluents liquides. Ces lits se présentent sous la forme de blocs de matériaux alvéolés les bactéries étant fixées sur les parois des alvéoles.

Le dispositif de dispersion est placé au-dessus des lits bactériens, et a pour fonction de répartir les effluents liquides à traiter sur toute la surface supérieure du lit bactérien.

US 2003/0196953 décrit un dispositif de dispersion dont l'organe de distribution ne comprte qu'une seule bouche de sortie. GB 18823 décrit un dispsoitif de dispersion selon le préambule de la revendication 1.

Les effluents liquides peuvent provenir d'une part de réseaux industriels, d'autre part de réseaux urbains de collecte des eaux usées, qui recueillent par exemple les eaux usées provenant des habitations, ou les eaux de ruissellement.

Le débit d'effluent à traiter varie fortement, au cours d'une même journée ou en fonction des conditions climatiques. Par exemple, le débit d'effluent à traiter est plus élevé le matin entre sept heures et huit heures ou le soir après dix-neuf heures, du fait qu'un grand nombre de gens utilisent des douches. Le débit d'effluent à traiter est également plus élevé pendant les périodes pluvieuses que pendant les périodes sèches. Enfin, à l'intérieur même de l'installation de traitement des eaux usées, ces effluents peuvent être recyclés, c'est-à-dire passer plusieurs fois à travers le même lit bactérien, ce qui peut conduire à une augmentation temporaire du débit à traiter.

Dans ce contexte, l'invention vise à proposer un dispositif de dispersion qui soit bien adapté pour le traitement d'effluents liquides de débit variable.

A cette fin, l'invention porte sur un dispositif de dispersion d'un effluent liquide selon la revendication 1.

Ainsi, il est possible d'adapter la configuration de l'organe de distribution au débit d'effluent à traiter. Quand le débit est modéré, une bouche unique est suffisante pour distribuer les effluents aux différents conduits de dispersion. Au contraire, quand le débit d'effluent à traiter est élevé, par exemple du fait de la recirculation au sein de l'installation de traitement ou du fait de précipitations importantes dans la région où est située l'installation de traitement, deux bouches de sortie sont mises en service.

Ceci permet notamment d'utiliser des équipements, notamment des bouches de sortie, avec une section de passage réduite, dimensionnées chacune pour laisser passer un débit d'effluent modéré. Ces équipements sont plus petits et moins coûteux.

Ceci est particulièrement avantageux pour les organes de distribution rotatifs du type décrit plus loin. Dans de tels organes de distribution, les bouches de sortie tournent autour d'un axe vertical, et passent successivement au droit de bacs de réception alimentant chacun un conduit de dispersion. Plus la bouche de sortie présente une section importante, plus le temps au cours duquel la bouche de sortie est à cheval sur deux bacs de réception est long. On a donc intérêt à minimiser la section de passage de la bouche de sortie, notamment circonférentiellement.

Le dispositif de dispersion peut comporter un conduit d'alimentation unique, ou deux conduits d'alimentation, ou plus de deux conduits d'alimentation, chaque conduit d'alimentation étant raccordé à l'organe de distribution. Le conduit d'alimentation débouche typiquement en bas de l'organe de distribution. En variante, il débouche en haut de l'organe de distribution.

Les conduits de dispersion sont typiquement des conduits fixes. Ils sont répartis au-dessus de toute la surface des lits bactériens. Chaque conduit de dispersion présente typiquement plusieurs orifices de dispersion d'effluent, par lesquels l'effluent sort du conduit. L'effluent sortant du conduit est projeté et tombe sur la surface supérieure du lit bactérien.

Chaque conduit de dispersion peut présenter toutes sortes de formes. Il peut être rectiligne. En variante, il comporte une branche centrale et plusieurs branches latérales s'étendant à partir de la branche centrale. Les orifices de dispersion sont portés par la branche centrale et par les branches latérales. Ce système de dispersion permet d'avoir sur toute la surface du secteur arrosé un même débit instantané et un même temps de passage. Ceci n'est pas vrai avec un système de bras tournant, dans lequel la vitesse de rotation permet de gérer la quantité d'eau répartie à chaque passage.

La forme des conduits de dispersion est fonction de la forme du lit bactérien.

L'organe de distribution comporte par exemple deux bouches de sortie. En variante, il comporte trois bouches de sortie, chacune apte à alimenter successivement chaque conduit de dispersion. Il peut également comporter plus de trois bouches de sortie, par exemple quatre ou plus de quatre. Le nombre de bouches de sortie peut être modifié au cours de la vie du dispositif de dispersion. Par exemple, si le débit d'effluent nominal à traiter est augmenté, une ou plusieurs bouches de sortie supplémentaires sont ajoutées. Ceci est le cas si le nombre de communes desservies par l'installation de traitement augmente, ou si la population de ces communes s'accroît. A cet effet, l'organe de distribution peut par exemple comporter dès sa mise en service une ou plusieurs bouches de sortie non fonctionnelles, obturées par des tapes. Ces bouches de sortie sont rendues fonctionnelles par retrait des tapes si nécessaire.

Alternativement on procède à un remplacement de l'organe de distribution complet, ou on ajoute une bouche de sortie à l'organe de distribution existant.

Comme indiqué ci-dessus, chaque bouche de sortie est apte à alimenter successivement chaque conduit de dispersion. On entend par là que la bouche de sortie est prévue pour alimenter d'abord un premier conduit de dispersion. Quand le premier conduit de dispersion est alimenté, les autres conduits ne sont pas alimentés. La bouche de sortie alimente ensuite un second conduit de dispersion, et cesse d'alimenter le premier conduit de dispersion. Elle alimente ainsi à la suite chacun des conduits de dispersion individuellement. Ceci permet de disperser l'effluent liquide alternativement sur les différentes zones du lit bactérien.

On passe de la première configuration à la deuxième configuration typiquement quand le débit d'effluent reçu du conduit d'alimentation correspond sensiblement au débit maximum Qₘₐₓ susceptible d'être évacué par la première bouche.

Ce changement de configuration peut être effectué de manière passive, sans intervention d'un opérateur ou d'un automatisme, comme expliqué plus loin.

La mise en service peut être conditionnée par un évènement, par exemple quand le débit d'effluent reçu du conduit d'alimentation dépasse la valeur limite Qₘₐₓ. Alternativement, la mise en service de la deuxième bouche est effectuée de manière préventive, par exemple pour une tranche horaire déterminée de la journée.

L'organe de distribution comprend une chambre, la première bouche de sortie débouchant dans la chambre à un premier niveau, la seconde bouche de sortie débouchant dans la chambre à un second niveau supérieur au premier niveau. Dans un mode de réalisation de l'invention, les deux bouches sont ouvertes en permanence.

Le conduit d'alimentation débouche à l'intérieur de la chambre. L'effluent est normalement évacué par la première bouche. Quand le débit d'effluent amené par le conduit d'alimentation est supérieur au débit qu'il est possible d'évacuer par la première bouche de sortie, le niveau d"effluent à l'intérieur de la chambre monte. Si le débit d'effluent reste élevé suffisamment longtemps, le niveau dans la chambre atteint le second niveau, et l'effluent sort non seulement par la première bouche mais également par la seconde bouche.

Au contraire, si le débit d'effluent amené par le conduit d'alimentation est inférieur au débit qu'il est possible d'évacuer à travers la première bouche, le niveau d'effluent à l'intérieur de la chambre reste au premier niveau.

Avantageusement, dans ce cas, l'organe de distribution est agencé pour que le second niveau soit réglable.

Ainsi, il est possible d'ajuster le débit maximum que la première bouche de sortie est capable d'évacuer, et le moment où la seconde bouche de sortie est mise en service. Le niveau de la seconde bouche de sortie est par exemple réglé en ajoutant un tronçon de chambre intermédiaire, ou plusieurs tronçons de chambre intermédiaire, entre la première bouche de sortie et la seconde bouche de sortie. Alternativement, la seconde bouche de sortie peut être montée coulissante verticalement le long de la chambre.

Dans une variante de réalisation, l'organe de distribution comprend un organe d'obturation susceptible d'adopter sélectivement une position d'obturation de la seconde bouche de sortie et une position de dégagement de la seconde bouche de sortie. Cet organe d'obturation est par exemple un volet. Il peut être manuel ou au contraire commandé à distance. Quand le débit d'effluent est inférieur à la limite déterminée, l'organe d'obturation obture la seconde bouche. Au contraire, quand le débit d'effluent est supérieur à la limite déterminée, l'organe d'obturation dégage la seconde bouche.

Dans ce cas, il est possible de disposer les deux bouches de sortie au même niveau de la chambre de l'organe de distribution, une telle possibilité n'étant pas couverte par la revendication 1.

Avantageusement, la première et/ou la seconde bouche de sortie comporte un volet réglable, agencé pour faire varier sélectivement une section de passage des effluents à travers ladite bouche de sortie. Ainsi, on peut faire varier la limite de débit provoquant le passage de la première à la seconde configuration. L'obturation partielle de la première bouche permet également de modifier le débit absorbé par la première bouche et d'équilibrer les débits sur les deux bouches. Il est en effet avantageux de régler le volet de la première bouche de manière à avoir sensiblement le même débit dans les deux bouches.

Ce volet est déplacé manuellement ou au contraire est motorisé et commandé à distance.

Typiquement, les bacs de réception sont agencés circonférentiellement autour de l'axe de rotation, les uns contre les autres. Typiquement, chaque bac en section horizontale présente une forme sensiblement tronconique. Les bacs sont séparés les uns des autres par des cloisons communes.

Chaque conduit de dispersion est raccordé au bas du bac de réception correspondant. L'organe de distribution est situé au-dessus des bacs de réception. L'effluent sortant de chaque bouche de sortie tombe par gravité dans les bacs de réception.

Avantageusement, la première et/ou la seconde bouche de sortie, considérée en projection dans un plan sensiblement perpendiculaire à l'axe de rotation, présente une forme allongée suivant une direction radiale.

Ainsi, le temps nécessaire pour que la bouche de sortie passe d'un bac à un autre est raccourci. En effet, la bouche de sortie est relativement étroite circonférentiellement, et relativement allongée radialement. La bouche de sortie, au départ, est située au-dessus d'un premier bac de réception. L'effluent sortant de la bouche de réception tombe dans le bac. Du fait de son déplacement en rotation, la bouche vient ensuite se placer au-dessus de la cloison séparant le premier bac de réception d'un second bac de réception. L'effluent sortant de la bouche tombe alors en partie dans le premier bac et en partie dans le second bac. Il peut se produire des projections de gouttelettes d'effluent. Par ailleurs, le débit d'effluent est alors réparti entre deux conduits de dispersion. Le débit dans le premier conduit de dispersion diminue, alors que le débit dans le second conduit de dispersion augmente. Il est préférable que cette transition soit réalisée rapidement, pour que le second conduit de dispersion passe rapidement dans un régime de débit stationnaire. Cette transition sera réalisée d'autant plus rapidement que la bouche de distribution, circonférentiellement, sera étroite.

De manière à favoriser encore plus la rapidité de la transition d'un bac à un autre, l'organe de distribution comporte avantageusement une bavette souple suspendue à la première et/ou la seconde bouche de sortie, agencée pour glisser sur les bords des bacs de réception quand l'organe de distribution tourne autour de l'axe de rotation.

La bavette est par exemple une pièce de caoutchouc. La bavette est située vers l'aval par rapport à la bouche de sortie. L'aval et l'amont sont ici entendus relativement au sens de rotation de l'organe de distribution. Quand l'organe de distribution tourne autour de son axe, la bavette vient porter contre le bord de la cloison séparant deux bacs sensiblement au moment où la bouche de sortie se trouve au-dessus de cette cloison. L'effluent sortant de la bouche va ainsi tomber sur la bavette qui va orienter l'effluent vers le premier bac. Quand la rotation de l'organe de distribution se poursuit, la bavette souple dépasse la cloison séparant les deux bacs, et vient pendre entièrement au-dessus du bac situé en aval. Elle ne porte plus contre la cloison et ne peut donc plus dévier les effluents vers le premier bac. Les effluents sont donc libres alors de tomber dans le second bac.

Ceci permet de réaliser une transition rapide d'un bac à un autre. Cette transition intervient quand le bord de la bavette quitte la cloison séparant les deux bacs.

De préférence, la première et/ou la seconde bouche de sortie est tournée vers le bas.

Dans une variante de réalisation non préférée non couverte par la revendication 1, l'organe de distribution est fixe, et les conduits de dispersion sont eux aussi fixes. Chaque bouche de sortie est raccordée à un collecteur, le collecteur alimentant les différents conduits de dispersion en parallèle par l'intermédiaire chacun d'une vanne. L'ouverture des vannes est phasée de manière à ce que chaque conduit de dispersion soit alimenté successivement.

D'autres caractéristiques et avantages de l'invention ressortiront de la description détaillée qui en est donnée ci-dessous, à titre indicatif, non limitatif, en référence aux figures annexées, parmi lesquelles :
- la figure 1 est une vue en coupe dans un plan vertical d'une installation de traitement d'effluent liquide équipée d'un dispositif de dispersion non couvert par la revendication 1;
- la figure 2 est une vue de dessus de l'installation de la figure 1;
- la figure 3 est une vue agrandie d'une partie du dispositif de dispersion, non couvert par la revendication 1, considéré en section selon les flèches III de la figure 4;
- la figure 4 est une vue de dessus, schématique, correspondant à la figure 3 ;
- la figure 5 est une vue similaire à celle de la figure 3, pour un mode de réalisation couvert par la revendication 1; et
- les figures 6 et 7 sont des représentations schématiques de détails du dispositif de dispersion de l'invention.

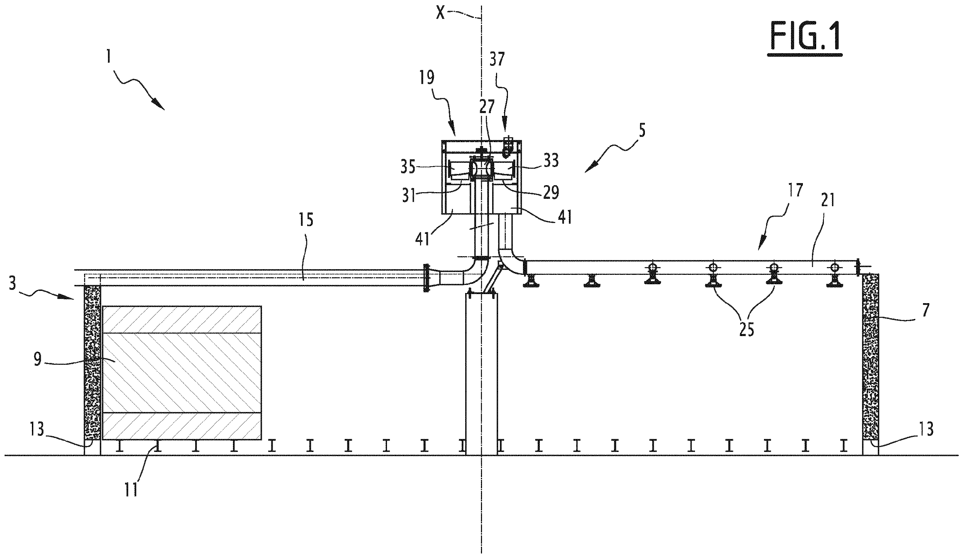

Le dispositif 1 représenté sur la figure 1, qui n'est pas couvert par la revendication 1, est destiné au traitement d'effluents liquides, et plus particulièrement à l'assainissement de ces effluents. Le dispositif comporte un lit bactérien 3 et un dispositif 5 de dispersion des effluents liquides.

Le lit bactérien 3 comporte une paroi périphérique externe 7, et un garnissage organisé 9 disposé à l'intérieur du lit bactérien. Le bassin 3 comporte encore un réseau de supportage 11 constituant le fond du lit bactérien, et sur lequel repose le garnissage 9.

La paroi 7 délimite un volume interne ouvert vers le haut. Considéré dans un plan horizontal, le garnissage y occupe sensiblement toute la section du volume interne du lit bactérien. Seule une partie du garnissage est représentée sur la figure 1.

Des orifices 13 sont ménagés en partie basse de la paroi 7, pour la circulation d'air.

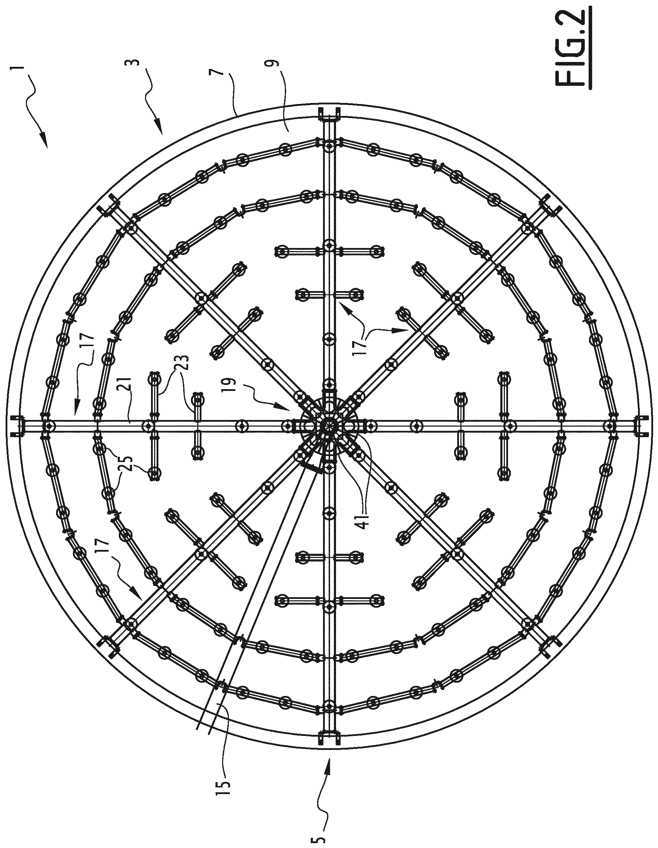

Comme visible sur les figures 1 et 2, le dispositif de dispersion est prévu pour répartir l'effluent liquide sur toute la surface du lit bactérien. Il est placé immédiatement au-dessus du lit bactérien.

Le dispositif de dispersion 5 comprend :
- un conduit d'alimentation en effluent 15 ;
- une pluralité de conduits de dispersion de l'effluent 17 ;
- un organe de distribution 19, prévu pour distribuer l'effluent amené par le conduit d'alimentation 15 dans les conduits de dispersion 17.

Dans l'exemple représenté, le bassin est circulaire. L'organe de distribution 19 est placé au centre du lit bactérien 3.

Le conduit d'alimentation 15 et les conduits de distribution, 17 sont fixes par rapport au lit bactérien 3.

Le conduit d'alimentation 15 s'étend sensiblement radialement depuis la paroi 7 jusqu'à l'organe de distribution 19. Il est raccordé à un réseau de circulation de l'effluent liquide, non représenté.

Chaque conduit de dispersion 17 comporte une branche principale 21 d'orientation sensiblement radiale et plusieurs branches latérales 23 se raccordant à la branche principale 21. La branche principale 21 s'étend à partir de l'organe de distribution 19, sensiblement jusqu'à la paroi 7 du bassin. Les branches principales 21 des différents conduits de dispersion sont régulièrement réparties circonférentiellement autour de l'organe de distribution 19. Les branches latérales 23 communiquent avec la branche principale 21 et s'étendent de part et d'autre de celle-ci. Chaque conduit de dispersion 17 comporte une pluralité d'orifices 25 de dispersion d'effluent. Ces orifices 25 se présentent sous la forme de buses et sont répartis le long de la branche principale 21 et des branches latérales 23. Elles sont orientées vers le bas, c'est-à-dire vers le lit bactérien. Elles sont sensiblement régulièrement réparties sur toute la surface du bassin 3.

L'organe de distribution 19 comprend une chambre 27 et des premières et secondes bouches de sortie 29 et 31. Chacune des deux bouches de sortie 29, 31 est raccordée à la chambre 27 par un conduit référencé respectivement 33, 35.

L'organe de distribution 19 est rotatif autour d'un axe vertical X par rapport au conduit de dispersion 17. Ainsi, le dispositif de dispersion 5 comporte un ensemble motoréducteur 37 d'entraînement en rotation de l'organe de distribution 19.

La chambre 27 est délimitée par un fond 55 et par une paroi latérale 57.

Les conduits 33 et 35 s'étendent radialement par rapport à l'axe de rotation. Ils sont diamétralement opposés. Les bouches de sortie 29 et 31 sont tournées vers le bas.

Le conduit d'alimentation 15 débouche en partie basse de la chambre 27, par un orifice ménagé dans le fond 55. En variante, il pourrait également déboucher en haut.

Les conduits 33 et 35 débouchent dans la chambre 27 par des orifices situés dans la paroi latérale 57, sensiblement au même niveau suivant la direction verticale (non couvert par la revendication 1).

L'organe de distribution 19 est équipé d'un volet 39 prévu pour sélectivement obturer ou dégager la seconde bouche 31. Ainsi, lorsque le débit d'effluent reçu du conduit d'alimentation est inférieur à une limite déterminée, le volet 39 est placé dans une position d'obturation de la seconde bouche 31. Tous les effluents sont ainsi orientés vers la première bouche de sortie 29. Quand le débit d'effluent est supérieur à la limite déterminée, le volet 39 est placé dans une position de dégagement de la seconde sortie. Les effluents sont orientés à la fois vers la bouche 29 et la bouche 31. Le volet 39 est par exemple déplacé manuellement entre sa position d'obturation et sa position de dégagement.

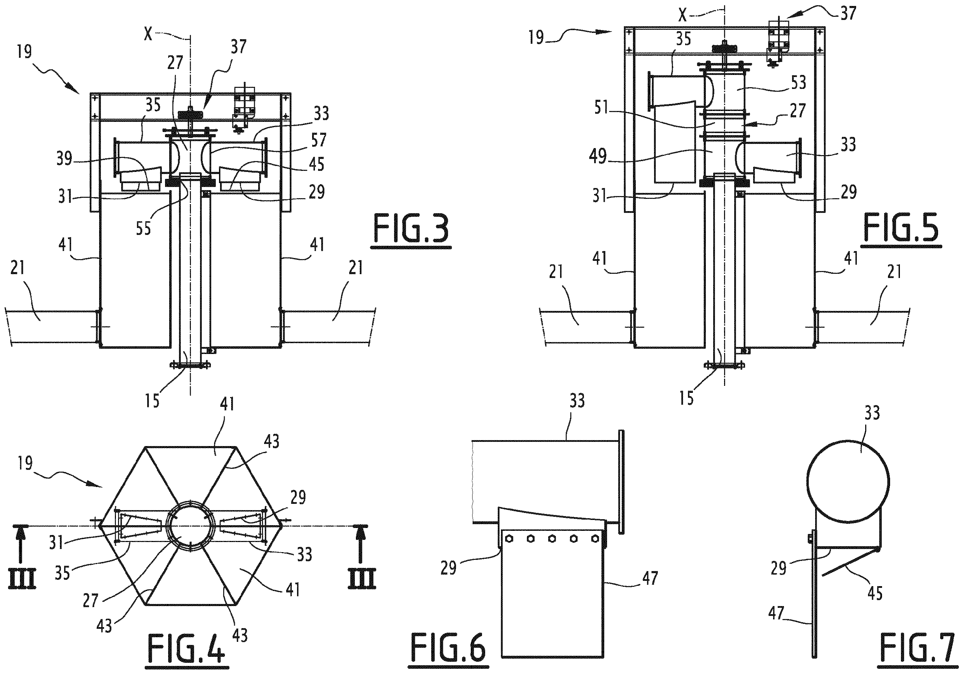

Comme visible sur les figures 3 et 4, le dispositif de dispersion comprend pour chaque conduit de dispersion 17 un bac de réception 41. Les bacs 41 sont disposés autour de l'axe de rotation, côte à côte. Ils présentent, dans un plan horizontal, chacun une section tronconique. Ils sont séparés les uns des autres par des cloisons sensiblement radiales 43. Chaque conduit 17 débouche en partie basse du bac 41 correspondant. Les bacs 41 sont agencés de manière à ce que les premières et secondes bouches de sortie 29 et 31 se déplacent en rotation au-dessus des bacs, quand l'organe de distribution tourne autour de son axe. Les bacs 41 sont ouverts vers le haut. Ainsi, chacune des bouches 29, 31 déverse l'effluent successivement dans chacun des bacs 41, au fur et à mesure de la rotation de l'organe de distribution. Chacun des conduits de dispersion 17 est ainsi alimenté successivement.

Comme visible sur la figure 4, chacune des deux bouches de sortie 29, 31 considérées dans un plan horizontal, présente une forme allongée radialement. Dans l'exemple représenté, chacune des deux bouches 29, 31 présente une forme tronconique, avec une petite base tournée vers l'axe de rotation, et une grande base à l'opposé de l'axe de rotation.

Comme visible sur les figures 3 et 7, la bouche de sortie 29 comporte un volet réglable 45 similaire au volet 39. Ce volet est déplaçable par rapport au conduit 33 de manière à faire varier sélectivement la section de passage offerte aux effluents à travers la bouche 29.

Dans la variante de réalisation représentée sur les figures 6 et 7, l'organe de distribution comprend pour chaque bouche de sortie 29, 31 une bavette 47. La bavette 47 est une pièce dans une matière telle que le caoutchouc, suspendue à la bouche de sortie correspondante. Elle peut comporter une partie supérieure rigide pour la fixation sur le conduit correspondant. La bavette est disposée d'un côté aval de la bouche de sortie. L'amont et l'aval sont ici entendus relativement au sens de rotation de l'organe de distribution. La longueur de la bavette est telle que l'extrémité inférieure de la bavette pénètre sur une courte longueur à l'intérieur des bacs de réception 41. Ainsi, pendant la rotation de l'organe de distribution, la bavette va glisser sur les bords supérieurs des cloisons 43. Plus précisément, quand la bouche de sortie est située au-dessus d'un premier bac 41, la bavette 47 pend à côté de la bouche de sortie. Quand la bouche de sortie approche d'une cloison 43 séparant le premier bac d'un second bac, l'extrémité de la bavette vient porter contre le haut de la cloison 43. La bavette adopte alors une position inclinée. Quand l'organe de distribution poursuit sa rotation, la bouche de sortie vient au-dessus de la cloison 43. L'effluent sortant de la bouche de sortie tombe alors sur la bavette 47, et coule dans le premier bac. Quand l'organe de distribution poursuit encore sa rotation, la bavette finit par glisser entièrement du côté du second bac. Elle reprend alors une position verticale, et l'effluent sortant de la bouche de sortie n'est plus dévié vers le premier bac. Il tombe donc dans le second bac.

Un mode de réalisation de l'invention est représenté sur la figure 5. Seuls les points par lesquels le mode de réalisation se différencie du dispositif non couvert par la revendication 1 seront détaillés ci-dessous. Les éléments identiques assurant la même fonction dans les deux dispositifs seront désignés par les mêmes références.

Dans le mode de réalisation de la figure 5, la chambre 27 s'étend verticalement sur une plus grande hauteur que dans le dispositif des figures 1 à 3. La première bouche 29 débouche dans le bas de la chambre 27. Au contraire, la seconde bouche 31 débouche vers le haut de la chambre 27. L'organe de distribution ne comporte pas de volet 39 prévu pour obturer sélectivement la seconde bouche de sortie 31.

Le fonctionnement du dispositif de dispersion est le suivant.

Quand le débit d'effluent arrivant par le conduit d'alimentation 15 est inférieur au débit que peut évacuer la première bouche de sortie 29 compte tenu de sa section de passage, tout l'effluent est dirigé vers la première bouche de sortie 29. Le niveau d'effluent dans la chambre 27 correspond sensiblement au niveau auquel le conduit 33 se raccorde à la chambre 27.

Au contraire, quand le débit d'effluent arrivant du conduit d'alimentation est supérieur au débit susceptible d'être évacué par la première bouche de sortie 29, le niveau d'effluent dans la chambre 27 augmente. Quand le niveau atteint le niveau auquel la seconde bouche 31 de sortie débouche dans la chambre 27, l'effluent commence à couler à travers la seconde bouche de sortie 31. Les deux bouches de sortie sont alors en service.

Comme visible sur la figure 5, la chambre 27 est délimitée par trois tronçons tubulaires raccordés de manière démontable les uns aux autres. Les tronçons tubulaires 49, 51 et 53 sont coaxiaux et sont empilés verticalement les uns au-dessus des autres. Le tronçon 49 est solidaire du conduit 33 et de la première bouche de sortie 29. De même, le tronçon supérieur 53 est solidaire du conduit 35 et de la seconde bouche de sortie 31. Le tronçon intermédiaire 51 est disposé entre les tronçons 49 et 53. Les tronçons 49, 51 et 53 sont démontables. Il est ainsi possible de disposer plusieurs tronçons intermédiaires 51 entre les tronçons 49 et 53 de manière à faire varier l'écartement vertical entre les tronçons 49 et 53. Il est possible de ne pas disposer de tronçons intermédiaires entre les tronçons 49 et 53. Les tronçons 49 et 53 sont alors directement raccordés l'un à l'autre. En variante, on dispose entre les tronçons 49 et 53 des tronçons intermédiaires 51 de différentes hauteurs variables, en fonction des besoins. En variante, le tronçon 53 est coulissant par rapport au tronçon 49.

## Revendications

1. Dispositif de dispersion d'un effluent liquide, le dispositif (5) comprenant :
- au moins un conduit (15) d'alimentation en effluent ;
- une pluralité de conduits (17) fixes de dispersion de l'effluent, ayant chacun au moins un orifice (25) de dispersion d'effluent ;
- un organe de distribution (19), avec une entrée raccordée au conduit d'alimentation (15), et au moins des première et seconde bouches de sortie (29, 31), l'organe de distribution (19) étant agencé pour que chaque bouche de sortie (29, 31) soit apte à alimenter successivement chaque conduit de dispersion (17) ;
- le dispositif de dispersion (1) comprenant pour chaque conduit de dispersion (17), un bac (41) de réception de l'effluent liquide sortant des première et seconde bouches de sortie (29, 31), le bac de réception (41) débouchant dans le conduit de dispersion (17) correspondant ;
- les conduits de dispersion (17) étant fixes et l'organe de distribution (19) étant mobile en rotation par rapport aux conduits de dispersion (17) autour d'un axe de rotation (X) sensiblement vertical ;
- les bacs de réception (41) étant répartis autour de l'axe de rotation (X) ;
l'organe de distribution (19) étant susceptible d'adopter une première configuration dans laquelle la première bouche de sortie (29) est active et la seconde bouche de sortie (31) est inactive quand un débit d'effluent reçu du conduit d'alimentation (15) est inférieur à une limite déterminée, et une seconde configuration dans laquelle les première et seconde bouches de sortie (29, 31) sont toutes deux actives quand le débit d'effluent reçu du conduit d'alimentation (15) est supérieur à la limite déterminée ;
**caractérisé en ce que** l'organe de distribution (19) comprend une chambre (27), la première bouche de sortie (29) débouchant dans la chambre (27) à un premier niveau, la seconde bouche de sortie (31) débouchant dans la chambre (27) à un second niveau supérieur au premier niveau.

2. Dispositif selon la revendication 1, **caractérisé en ce que** l'organe de distribution (19) est agencé pour que le second niveau soit réglable.

3. Dispositif selon la revendication 1 ou 2, **caractérisé en ce que** la chambre (27) est délimitée au moins par un premier tronçon tubulaire (49) et un second tronçon tubulaire (53), lesdits tronçons tubulaires (49, 53) étant raccordés de manière démontable l'un à l'autre, la première bouche (29) débouchant dans la chambre (27) par un orifice ménagé dans le premier tronçon tubulaire (49) et la seconde bouche (31) débouchant dans la chambre (27) par un orifice ménagé dans le second tronçon tubulaire (53).

4. Dispositif selon l'une quelconque des revendications 1 à 3, **caractérisé en ce que** la chambre (27) est délimitée par des premier et seconds tronçons tubulaires (49, 53), le second tronçon tubulaire (53) étant coulissant suivant une direction verticale par rapport au premier tronçon tubulaire (49), les première et seconde bouches (29, 31) débouchant dans la chambre (27) par des orifices respectifs ménagés dans les premier et second tronçons tubulaires (49, 53).

5. Dispositif selon l'une quelconque des revendications précédentes, **caractérisé en ce que** l'organe de distribution (19) comprend un organe d'obturation (39) susceptible d'adopter sélectivement une position d'obturation de la seconde bouche (31) et une position de dégagement de la seconde bouche (31).

6. Dispositif selon l'une quelconque des revendications précédentes, **caractérisé en ce que** la première et/ou la seconde bouche de sortie (29, 31) comporte un volet réglable (39, 45) agencé pour faire varier sélectivement une section de passage des effluents à travers la bouche de sortie (29, 31).

7. Dispositif selon l'une quelconque des revendications précédentes, **caractérisé en ce que** la première et/ou la seconde bouche de sortie (29, 31), considérée en projection dans un plan sensiblement perpendiculaire à l'axe de rotation (X), présente une forme allongée suivant une direction radiale.

8. Dispositif selon l'une quelconque des revendications précédentes , **caractérisé en ce que** l'organe de distribution (19) comporte une bavette souple (47) suspendue à la première et/ou la seconde bouche de sortie (29, 31), agencée pour glisser sur des bords des bacs de réception (41) quand l'organe de distribution (19) tourne autour de l'axe de rotation (X).

## Patentansprüche

1. Vorrichtung zur Dispersion von flüssigem Abfall, wobei die Vorrichtung umfasst:
- mindestens einen Kanal (15) zur Versorgung mit Abfall;
- eine Mehrzahl von feststehenden Kanälen (17) zur Dispersion des Abfalls, die jeweils mindestens eine Öffnung (25) zur Dispersion des Abfalls aufweisen;
- ein Verteilerelement (19) mit einem Eingang, der an den Versorgungskanal (15) angeschlossen ist, und mindestens einer ersten und zweiten Auslassöffnung (29, 31), wobei das Verteilerelement (19) so angeordnet ist, dass jede Auslassöffnung (29, 31) in der Lage ist, aufeinanderfolgend jeden Dispersionskanal (17) zu versorgen;
- wobei die Vorrichtung (1) zur Dispersion für jeden Dispersionskanal (17) einen Behälter (41) zur Aufnahme flüssigen Abfalls umfasst, der die erste und zweite Auslassöffnung (29, 31) verlässt, wobei der Aufnahmebehälter (41) in den entsprechenden Dispersionskanal (17) mündet;
- die Dispersionskanäle (7) feststehend sind und das Verteilerelement (19) drehbeweglich in Bezug auf die Dispersionskanäle (17) um eine im Wesentlichen senkrechte Drehachse (1) ist;
- die Aufnahmebehälter (41) um die Drehachse (X) herum verteilt sind;
wobei das Verteilerelement (19) geeignet ist, eine erste Konfiguration, in der die erste Auslassöffnung (29) aktiv ist und die zweite Auslassöffnung (31) inaktiv ist, wenn ein Durchfluss des vom Versorgungskanal (15) empfangenen Abfalls geringer ist als eine vorbestimmte Grenze, und eine zweite Konfiguration, in der die erste und die zweite Auslassöffnung (29, 31) beide aktiv sind, wenn der Durchfluss des vom Versorgungskanal (15) aufgenommenen Abfalls größer ist als die vorbestimmte Grenze, anzunehmen,
**dadurch gekennzeichnet, dass** das Verteilerelement (19) eine Kammer (27) umfasst, wobei die erste Auslassöffnung (29) an einem ersten Niveau in die Kammer (17) mündet und die zweite Auslassöffnung (31) an einem zweiten Niveau über dem ersten Niveau in die Kammer (27) mündet.

2. Vorrichtung nach Anspruch 1, **dadurch gekennzeichnet, dass** das Verteilerelement (19) so ausgebildet ist, dass das zweite Niveau einstellbar ist.

3. Vorrichtung nach Anspruch 1 oder 2, **dadurch gekennzeichnet, dass** die Kammer (27) mindestens durch einen ersten rohrförmigen Abschnitt (49) und einen zweiten rohrförmigen Abschnitt (53) begrenzt ist, wobei die rohrförmigen Abschnitte (49, 53) in demontierbarer Weise aneinander angeschlossen sind, die erste Auslassöffnung (29) in die Kammer (27) über eine in dem ersten rohrförmigen Abschnitt (49) eingearbeitete Öffnung mündet und die zweite Auslassöffnung (31) über eine in dem zweiten rohrförmigen Abschnitt (53) eingearbeitete Öffnung in die Kammer (27) mündet.

4. Vorrichtung nach einem beliebigen der Ansprüche 1 bis 3, **dadurch gekennzeichnet, dass** die Kammer (27) durch einen ersten und zweiten rohrförmigen Abschnitt (49, 53) begrenzt ist, wobei der zweite rohrförmige Abschnitt (53) in eine vertikale Richtung in Bezug auf den ersten rohrförmigen Abschnitt (49) verschiebbar ist und die erste und zweite Auslassöffnung (29, 31) über jeweilige Öffnungen, die in dem ersten und zweiten rohrförmigen Abschnitt (49, 53) eingearbeitet sind, in die Kammer (27) münden.

5. Vorrichtung nach einem beliebigen der vorhergehenden Ansprüche, **dadurch gekennzeichnet, dass** das Verteilerelement (19) ein Verschlusselement (39) umfasst, das geeignet ist, wahlweise eine Stellung zum Verschließen der zweiten Auslassöffnung (31) und eine Stellung zum Freimachen der zweiten Auslassöffnung (31) einzunehmen.

6. Vorrichtung nach einem beliebigen der vorhergehenden Ansprüche, **dadurch gekennzeichnet, dass** die erste und/oder die zweite Auslassöffnung (29, 31) eine regelbare Klappe (39, 45) aufweist, die ausgebildet ist, wahlweise einen Durchgangsquerschnitt für die Abfälle durch die Auslassöffnung (29, 31) hindurch zu verändern.

7. Vorrichtung nach einem beliebigen der vorhergehenden Ansprüche, **dadurch gekennzeichnet, dass** die erste und/oder die zweite Auslassöffnung (29, 31) eine in der Projektion auf eine Ebene im Wesentlichen senkrecht zur Drehachse (X) betrachtet gemäß einer radialen Richtung langgestreckte Form aufweist.

8. Vorrichtung nach einem beliebigen der vorhergehenden Ansprüche, **dadurch gekennzeichnet, dass** das Verteilerelement (19) ein biegbares Abweiselement (47) aufweist, das an der ersten und/oder zweiten Auslassöffnung (29, 31) angehängt ist und ausgebildet ist, über die Ränder der Aufnahmebehälter (41) zu gleiten, wenn das Verteilerelement (19) sich um die Drehachse (X) dreht.

## Claims

1. A device for dispersing a liquid effluent, said device (5) comprising:
- at least one effluent supply pipe (15);
- a plurality of fixed effluent dispersion pipes (17), each having at least one effluent dispersion opening (25);
- a distribution unit (19), with an inlet connected to said supply pipe (15), and at least first and second outlets (29, 31), said distribution unit (19) being arranged so that each outlet (29, 31) is capable of successively feeding each dispersion pipe (17);
- said dispersion device (1) comprising, for each dispersion pipe (17), a tank (41) for receiving liquid effluent exiting said first and second outlets (29, 31), said reception tank (41) opening into the corresponding dispersion pipe (17);
- said dispersion pipes (17) being fixed and said distribution unit (19) being rotationally mobile relative to said dispersion pipes (17) about a substantially vertical rotation axis (X);
- said reception tanks (41) being distributed around said rotation axis (X);
said distribution unit (19) being capable of adopting a first configuration, in which the first outlet (29) is active and the second outlet (31) is inactive when a flow of effluent received from said supply pipe (15) is below a determined limit, and a second configuration, in which said first and second outlets (29, 31) are both active when the flow of effluent received from said supply pipe (15) is above said determined limit;
**characterised in that** said distribution unit (19) comprises a chamber (27), said first outlet (29) opening into said chamber (27) at a first level, said second outlet (31) opening into said chamber (27) at a second level higher than said first level.

2. The device according to claim 1, **characterised in that** said distribution unit (19) is arranged so that said second level is adjustable.

3. The device according to claim 1 or 2, **characterised in that** said chamber (27) is at least demarcated by a first tubular section (49) and a second tubular section (53), said tubular sections (49, 53) being connected to each other in a detachable manner, said first outlet (29) opening into said chamber (27) via an opening arranged in said first tubular section (49) and said second outlet (31) opening into said chamber (27) via an opening arranged in said second tubular section (53).

4. The device according to any one of claims 1 to 3, **characterised in that** said chamber (27) is demarcated by the first and second tubular sections (49, 53), said second tubular section (53) being able to slide in a vertical direction relative to said first tubular section (49), said first and second outlets (29, 31) opening into said chamber (27) via respective openings arranged in said first and second tubular sections (49, 53).

5. The device according to any one of the preceding claims, **characterised in that** said distribution unit (19) comprises a plugging component (39) capable of selectively adopting a position for plugging said second outlet (31) and a position for unplugging said second outlet (31).

6. The device according to any one of the preceding claims, **characterised in that** said first and/or said second outlet (29, 31) comprise(s) an adjustable shutter (39, 45) that is arranged to selectively vary a section for the flow of the effluents through said outlet (29, 31).

7. The device according to any one of the preceding claims, **characterised in that** said first and/or said second outlet (29, 31), considered to project in a plane substantially perpendicular to said rotation axis (X), have an elongated shape in a radial direction.

8. The device according to any one of the preceding claims, **characterised in that** said distribution unit (19) comprises a flexible flap (47) that is suspended from said first and/or said second outlet (29, 31) and is arranged so as to slide on the edges of said reception tanks (41) when said distribution unit (19) rotates about said rotation axis (X).
